# EUROPÄISCHE PATENTANMELDUNG

(11) **EP 3 599 072 A1**
(43) Veröffentlichungstag der Anmeldung: **29.01.2020**
(21) Anmeldenummer: 18181910.3
(22) Anmeldetag: 05.07.2018
(51) Int. Cl.: B29C 48/15, B21C 1/20, B21C 1/22, B21C 9/00, B29C 48/34

(54) **VERFAHREN UND VORRICHTUNG ZUM AUFTRAGEN VON LACKIERUNGSSCHICHTEN AUF EIN BESCHICHTUNGSGUT**

(71) Anmelder: Tipper Tie technopack GmbH, 21509 Glinde (DE)
(72) Erfinder: Bogun, Thomas, 21509 Glinde (DE)
(74) Vertreter: Glawe, Delfs, Moll

(57) **Zusammenfassung**

Gegenstand der vorliegenden Erfindung ist ein Verfahren zum Auftragen von Lackierungsschichten (9) auf ein Beschichtungsgut (1, 11, 21, 31), bei dem das Beschichtungsgut (1, 11, 21, 31) durch eine Beschichtungskammer (2) gezogen wird, die ein unter einer Druckeinwirkung stehendes Lackierungsmittel (3) enthält, welches durch thermische Einwirkung verflüssigt oder erweicht ist, wobei das Beschichtungsgut (1, 11, 21, 31) durch ein Ziehwerkzeug (8) gezogen wird, wobei das Lackierungsmittel (3) als Schmierstoff zwischen dem Ziehwerkzeug (8) und einer Oberfläche des Beschichtungsguts (8) dient und wobei gleichzeitig die Lackierungsschicht (9) auf die Oberfläche des Beschichtungsgutes (8) aufgetragen wird. Eine entsprechende Vorrichtung zum Auftragen von Lackierungsschichten (9) auf ein Beschichtungsgut (1, 11, 21, 31) ist ebenfalls Gegenstand der vorliegenden Erfindung. Mit Hilfe der Erfindung können Lackschichten auf effiziente und wirtschaftliche Weise auf ein Beschichtungsgut aufgetragen werden.

## Beschreibung

Die Erfindung betrifft ein Verfahren und eine Vorrichtung zum Auftragen von Lackierungsschichten auf ein Beschichtungsgut wie beispielsweise Draht, insbesondere auf metallischem Draht, wie Aluminiumdraht, Kupferdraht oder auf Drähten aus anderen Metallen oder Legierungen. Erfindungsgemäß lackierte Aluminiumdrähte können beispielsweise zur Herstellung von Verschlussklammern für Beutel und Schläuche in der Lebensmittelproduktion verwendet werden. Derart lackierte Kupferdrähte können beispielsweise auf den Gebieten der Elektrotechnik und Elektronik eingesetzt werden.

Für das Auftragen von Lackierungsschichten auf Draht sind bereits Drahtlackieranlagen bekannt, bei denen organisches Kunstharz, das in einem Lösungsmittel gelöst ist, im Durchlaufverfahren oder Tauchverfahren auf den Draht aufgebracht wird. Als Lösungsmittel werden dabei meist Kohlenwasserstoffe oder auch wässrige Systeme verwendet, die sich beim Entweichen und Verdampfen aus der Lackschicht negativ auf den Gesundheitsschutz und Wirtschaftlichkeit der Verfahren auswirken (DE-AS 26 38 763, WO 2013/020977 A1). Nach dem Aufbringen wird der Draht meist durch eine Lackabstreifdüse gezogen, mit der überschüssiger Lack abgestriffen wird (DE 199 23 035 A1). Da der Innendurchmesser der Abstreifdüse größer bemessen ist als der Durchmesser des unbeschichteten Drahtes, bildet die Abstreifdüse mit ihrem Loch ein Kaliber für die Dicke der Lackierungsschicht.

Bekannt ist auch die Verwendung von thermoplastischen Kunststoffen für die Lackierungsschicht (EP 0 030 71 B1, WO 2013/020977). Hierbei werden die thermoplastischen Kunststoffe aufgeschmolzen mit einem Extruder auf den Draht aufgebracht. Auch bei dieser Verfahrensart können Abstreifdüsen zum Einsatz kommen, die mit ihrem Loch ein Kaliber für die Dicke der Lackierungsschicht bilden (DE-OS 27 53 91). Nach dem Aufbringen der Lackierungsschicht kann sich eine Nachbehandlung anschließen, beispielsweise eine Kühlung oder auch eine Strahlungsbehandlung zur Nachvernetzung des thermoplastischen Kunststoffes.

Nachteilig bei den mit Abstreifdüsen durchgeführten bekannten Verfahren ist, dass die Lackierungsschichten eine ungenügende Qualität hinsichtlich einer gleichmäßigen Schichtdicke aufweisen. Die Ursache ist darin zu sehen, dass der mit dem Lackierungsmittel behaftete Draht beim Transport durch die Lackabstreifdüse seitlich ausweichen kann, wodurch sich radial und axial unterschiedliche Schichtdicken und auch Schichtfehlstellen ergeben.

Der Erfindung liegt die Aufgabe zugrunde, ein Verfahren und Vorrichtung zum Auftragen von Lackierungsschichten auf ein Beschichtungsgut zu entwickeln, die auch ohne schädliche Lacklösungsmittel durchführbar sind und mit denen dabei eine hochleistungsfähige Lackierungsbeschichtung bei gleichzeitig verbesserter Beschichtungsqualität und einer hohen Produktivitätssteigerung erreicht werden kann.

Diese Aufgabe ist mit einem Verfahren zum Auftragen von Lackierungsschichten auf Beschichtungsgut gelöst, bei dem das zu beschichtende Beschichtungsgut durch eine Beschichtungskammer gezogen wird, die ein unter einer Druckeinwirkung stehendes Lackierungsmittel enthält, welches durch thermische Einwirkung verflüssigt oder erweicht ist, wobei das Beschichtungsgut durch ein Ziehwerkzeug gezogen wird, wobei das Lackierungsmittel als Schmierstoff zwischen dem Ziehwerkzeug und einer Oberfläche des Beschichtungsguts dient und wobei gleichzeitig die Lackierungsschicht auf die Oberfläche aufgetragen wird. Das Ziehwerkzeug kann am Ausgang der Beschichtungskammer angeordnet sein.

In einer bevorzugten Ausführungsform umfasst das Beschichtungsgut einen Draht oder ist drahtförmig ausgebildet. Alternativ kann das Beschichtungsgut auch ein Rohr umfassen oder rohrförmig ausgebildet sein.

Vorzugsweise wird eine Querschnittsform des Beschichtungsguts beim Ziehen des Beschichtungsguts durch das Ziehwerkzeug verändert. Insbesondere kann ein Querschnitt des Beschichtungsgutes reduziert werden.

In einer bevorzugten Ausführungsform wird mit dem Ziehwerkzeug ein Umformgrad im Bereich von 0,01% bis 30%, vorzugsweise von 0,05% bis 15%, weiter vorzugsweise von 0,1% bis 5 % realisiert. Der letztgenannte Bereich eignet sich besonders zum Beschichten von Aluminiumdraht zur Verwendung für Verschlussklammern.

Erfindungsgemäß werden vorteilhaft lösungsmittelfreie oder lösungsmittelarme Lackierungsmittel verwendet, vorzugsweise Polymere, wie Polyethylenwachse oder Polyurethane.

Zweckmäßig kann das Lackierungsmittel der Beschichtungskammer mit einem Extruder zugeführt werden.

In einer vorteilhaften Ausführungsform wird eine thermische Einwirkung auf das Lackierungsmittel und/oder auf das Beschichtungsgut durchgeführt.

Vorteilhafterweise wird der Beschichtungskammer ein vorgewärmtes Beschichtungsgut zugeführt. Das Beschichtungsgut kann auf übliche Weise vorgewärmt werden.

Das mit der Lackierungsschicht versehene Beschichtungsgut wird zweckmäßigerweise nach dem Verlassen der Beschichtungskammer gekühlt. Die Lackierungsschicht kann auf übliche Weise mit einem Kühlmedium in Kontakt gebracht werden, beispielsweise unter Verwendung von Wasser als Kühlmedium.

In einer bevorzugten Ausführungsform werden der in der Beschichtungskammer vorhandene Druck und / oder die vorhandene Temperatur gemessen. Die Messwerte der Druck und / oder Temperaturmessung werden weiter vorzugsweise zu einer Steuerung und Regelung des Lackierungsprozesses und seiner Stabilität genutzt.

Zur Lösung der Erfindungsaufgabe beinhaltet die Erfindung auch eine Vorrichtung zum Auftragen von Lackierungsschichten auf ein Beschichtungsgut, enthaltend eine Beschichtungskammer, durch die das zu beschichtende Beschichtungsgut gezogen werden kann, wobei die Beschichtungskammer ein unter einer Druckeinwirkung stehendes Lackierungsmittel enthält, welches durch eine thermische Einwirkung verflüssigt oder erweicht ist, wobei die Beschichtungskammer außerdem ein Ziehwerkzeug aufweist, durch das das Beschichtungsgut gezogen werden kann. In einer bevorzugten Ausführungsform weist die Beschichtungskammer an der Drahteintrittsseite ein den eintretenden Draht umschließendes vorzugsweise ringförmig ausgebildetes Dichtwerkzeug zur zielgerichteten Vermeidung es Austretens des Lackierungsmittels entgegen der Transportrichtung auf. Von Vorteil ist, wenn das Ziehwerkzeug auf der Drahtaustrittsseite der Beschichtungskammer angeordnet ist.

Das Ziehwerkzeug ist bevorzugt dazu ausgebildet, einen Querschnitt des Beschichtungsguts zu reduzieren, wenn das Beschichtungsgut durch das Ziehwerkzeug (8) gezogen wird. Das Ziehwerkzeug kann ein in der Ziehtechnologie gängiger kommerziell erhältlicher Ziehstein sein. Derartige Ziehsteine für das Drahtziehen sind handelsüblich und werden weltweit kommerziell hergestellt und gehandelt, beispielsweise von der Firma Willi Bremer GmbH, D-35756 Mittenaar. Eine spezielle Gestaltung des eingesetzten Ziehsteins ist für die Erfindung nicht erforderlich. Beispiele derartiger Ziehsteine sind offenbart in den US-Patenten 1,582,434 und 4,270,373 oder der WO-Schrift 02/072291 A1. Das Ziehwerkzeug kann für eine Querschnittsreduzierung des Beschichtungsgutes mit einem Umformgrad vorzugsweise im Bereich von 0,01% bis 30%, vorzugsweise 0,05% bis 15%, weiter vorzugsweise 0,1% bis 5% ausgelegt sein.

An der Beschichtungskammer kann zur Zuführung des Lackierungsmittels und der Druckerzeugung zweckmäßig ein Extruder angeschlossen sein.

In einer bevorzugten Ausführungsform ist das Ziehwerkzeug dazu ausgebildet, eine Querschnittsform des Beschichtungsguts zu verändern, wenn das Beschichtungsgut durch das Ziehwerkzeug gezogen wird.

Zweckmäßig ist die Beschichtungskammer beheizt.

An der Beschichtungskammer sind vorzugsweise ein Druckmesser und / oder eine Temperaturmesseinrichtung angeschlossen, deren Messwerte bevorzugt zu einer Steuerung und Regelung des Lackierungsprozesses und seiner Stabilität genutzt werden.

Vorteilhafterweise ist in der Beschichtungskammer lösungsmittelfreies oder lösungsmittelarmes Lackierungsmittel enthalten.

Die Lackierungsmittel sind erfindungsgemäß vorzugsweise Polymere, wie Polyethylenwachse oder Polyurethane, die durch thermische Einwirkung erweicht oder verflüssigt sind.

Mit der erfindungsgemäßen Lösung wird im Vergleich mit dem Stand der Technik ein wirtschaftlicheres Auftragen von Lackierungsschichten insbesondere auf metallischen Drähten ermöglicht. Die erzeugten Lackierungsschichten weisen durch die Verwendung des zur Querschnittsreduzierung geeigneten Werkzeugs, welches bevorzugt eine Querschnittsreduzierung mit einem Umformgrad im Bereich von 0,1% bis 5% bewirkt, an Stelle einer Abstreifdüse, eine ausgezeichnete Qualität hinsichtlich einer gleichmäßig dicken und geschlossenen Lackierungsschicht über Umfang und Stranglänge des Drahtes sowie eine besonders fest auf der Drahtoberfläche haftende Lackierungsschicht.

Ein weiterer Vorteil ist, dass kohlenwasserstoffhaltige Lackierungsmittel vermieden werden, und damit keine schädlichen Lösungsmitteldämpfe entstehen, die sich beim Entweichen und Verdampfen aus der Lackschicht negativ auf den Gesundheitsschutz und Wirtschaftlichkeit der Verfahren auswirken. Mit der erfindungsgemäßen Lösung ist zudem eine große Geschwindigkeitssteigerung beim Auftragen von Lackierungsmitteln auf Drähten erreichbar.

Bei Kupferdraht für elektrotechnische Anwendungen werden mit der Lackierungsschicht besonders gute Isolationseigenschaften erreicht, da die auf dem blanken Kupferdraht vorkommenden metallischen Flitterteilchen durch den im erfindungsgemäßen Lackierungsprozess stattfinden Umformvorgang in die Lackierungsschicht liegend eingebettet werden und damit nicht als störende Leiterbrücken in der als Isolator dienenden Lackierungsschicht wirken können.

Bei der Verwendung der vorliegenden Erfindung zur Beschichtung eines Drahts muss die Form des Drahtes beim Verlassen des Ziehwerkzeuges bzw. des Ziehsteins nicht rund ausgebildet sein. Vielmehr kann die Querschnittsform des beschichteten Drahts quadratisch oder rechteckig sein. Drähte dieser Gestalt können auf einfache Weise in eine kontinuierliche Klammerform gebracht werden, um Verschlussklammern für Tüten oder Schläuche für die Lebensmittelproduktion zu bilden. Es ist in diesem Fall nicht mehr erforderlich, einen beschichteten runden Draht in eine quadratische oder rechteckige Querschnittsform zu bringen, welche zur Herstellung der Verschlussklammern erforderlich ist.

In einer weiteren Ausführungsform kann das zunächst runde drahtförmige Beschichtungsgut umgeformt werden in einen beschichteten Draht mit anderen Querschnittsformen, wie beispielsweise geradlinig, trapezförmig, oval, elliptisch, länglich oder auf andere Weise "nicht-rund". Draht, welcher in diese Querschnittsformen gezogen wird, kann anschließend einer Presse zugeführt werden, welche den Draht ablängt und in U-förmige Klammern umformt. Die geradlinigen, trapezförmigen, ovalen, elliptischen, länglichen oder auf andere Weise "nicht-runden" Querschnittsformen ermöglichen es, dass die U-förmigen Klammern abgerundete Außenflächen aufweisen, wobei die nach innen weisenden Flächen der Schenkel des "U" flach oder planar sind. Dadurch kann eine solche Klammer die Tüte oder den Schlauch in der Praxis sicher verschließen.

Zudem kann die vorliegende Erfindung auch in Verbindung mit von Draht verschiedenem Beschichtungsgut verwendet werden. Zum Beispiel kann die vorliegende Erfindung auf Beschichtungsgut in Form von Rohren zum Transport von Fluiden angewendet werden. Wenn ein Rohr durch ein Ziehwerkzeug gezogen wird, kann eine Beschichtung auf die äußere Oberfläche aufgebracht werden, da der äußere Durchmesser des Rohres geringfügig oder nominell reduziert wird. Ein Ziehdorn kann innerhalb des Rohres positioniert werden an der Position des Ziehwerkzeuges, um eine gewünschte Verringerung der Wanddicke des Rohres zu erreichen. Ebenso wie bei der Beschichtung eines Drahtes dient das verflüssigte Lackierungsmittel als Schmiermittel, während das Rohr durch das Ziehwerkzeug gezogen wird.

Die Erfindung ist nachstehend an Hand von Ausführungsbeispielen und zugehörigen Zeichnungen näher erläutert.

In den Zeichnungen zeigen:
- Fig. 1: eine Vorrichtung in Schnittdarstellung zum Auftragen von Lackierungsschichten auf Draht,
- Fig. 2: in Schnittdarstellung die Beschichtungskammer der Fig. 1, als Einzelheit und in größerer Darstellung,
- Fig. 3: eine mit Figur 2 vergleichbare Ansicht, wobei die Anwendung der vorliegenden Erfindung auf ein Rohr gezeigt ist,
- Fig. 4: eine mit Figur 2 vergleichbare Ansicht, wobei die Anwendung der vorliegenden Erfindung zur Umformung eines runden Drahtes in einen Draht mit quadratischem oder rechteckigen Querschnitt gezeigt ist,
- Fig. 4A, 4B: Querschnittsansichten der Figur 4, in denen die Querschnittsformen gezeigt sind, in die das Beschichtungsgut gezogen oder umgeformt wird,
- Fig. 5: eine mit Figur 2 vergleichbare Ansicht, wobei der zunächst runde Querschnitt des Drahts umgeformt wird in einen geradlinigen, trapezförmigen, elliptischen, ovalen, länglichen oder "nicht-runden" Querschnitt,
- Fig. 5A-5D: Querschnittsansichten der Figur 5, welche die Querschnittsformen zeigen, in die das Beschichtungsgut gezogen oder umgeformt wird.

### Beispiel 1

Dieses Beispiel betrifft das Aufbringen einer Lackierungsschicht aus einem modifizierten Polyethylenwachs auf einen Draht 1 mit Hilfe der in den Zeichnungen dargestellten Vorrichtung.

Bei dem Draht 1 handelt es sich in diesem Fall um einen Aluminiumdraht aus dem nach der Lackierung beispielsweise Verschlussklammern für Beutel und Schläuche für die Lebensmittelproduktion herstellbar sind.

Die Vorrichtung enthält eine Beschichtungskammer 2, die das verflüssigte Polyethylenwachs 3 als Lackierungsmittel enthält. Durch die Beschichtungskammer 2 wird der zu beschichtender Draht 1 gezogen. Dabei umschließt den Draht 1 am Eingang der Beschichtungskammer 2 ein ringförmiges Dichtwerkzeug 4, das den Austritt des Lackierungsmittels 3 entgegen der Transportrichtung 5 des Drahtes 1 verhindert.

Über eine Zuführung 6 wird mittels eines Extruders 7 das darin verflüssigte Polyethylenwachs 3 mit einer Temperatur zwischen 88°C und 90°C in die Beschichtungskammer 2 gepresst. In der Beschichtungskammer wird ein Druck von 1,0 MPa erzeugt.

Der Draht 1 wird mit einer Geschwindigkeit von 4 m/s durch die Vorrichtung gezogen.

Am Ausgang der Beschichtungskammer 2 ist ein Umformwerkzeug in Form eines in der Drahtziehtechnologie gängigen Ziehsteins 8 angeordnet, mit dem der Draht 1 mit seinem Ausgangsdurchmesser von 2,4 mm mit einem Umformgrad von 2,4% umgeformt wird.

Bei der Umformung durch den Ziehstein 8 dient das verflüssigte Polyethylenwachs 3 als Schmiermittel, und es wird gleichzeitig bei der Umformung als geschlossene und festhaftende Lackierungsschicht 9 auf den im Durchmesser verringerten Draht 1 aufgeprägt. Die erzeugte Lackierungsschicht 9 hat eine Dicke von 4,8 µm.

Die Beschichtungskammer 2 steht mit einer Druck- und einer Temperaturmesseinrichtung 10 in Verbindung, mit der der Druck und die Temperatur in der Beschichtungskammer 2 überwacht werden. Ausgehend von den Messwerten kann mittels einer Druck- und Temperaturregelung der Lackierungsprozess gesteuert und geregelt und somit stabil gehalten werden.

Nach dem Verlassen der Beschichtungskammer 2 wird der mit der Lackierungsschicht 9 versehene Draht 1 mit Wasser abgekühlt, danach getrocknet und dann aufgespult.

### Beispiel 2

Dieses Beispiel betrifft das Aufbringen einer Lackierungsschicht aus einem modifizierten Polyethylenwachs auf einen Aluminiumdraht 1 mit einem Ausgangsdurchmesser von 3,6 mm.

Für das Aufbringen der Lackierungsschicht wird auch die in den Zeichnungen dargestellte Vorrichtung mit dem in der Beschichtungskammer 2 enthaltenen verflüssigten Polyethylenwachs 3 verwendet, das eine Temperatur zwischen 86°C und 88°C besitzt. Der durch den Extruder 7 in der Beschichtungskammer 2 erzeugte Druck des Lackierungsmittels 3 beträgt 1,0 MPa.

Der Draht 1 wird mit einer Geschwindigkeit von 3 m/s durch die Vorrichtung gezogen.

Am Ausgang der Beschichtungskammer 2 ist als Umformwerkzeug ein in der Drahtziehtechnologie gängiger Ziehstein 8 angeordnet, mit dem der Draht 1 mit einem Umformgrad von 3,5% umgeformt wird. Die gebildete Lackierungsschicht 9 auf dem umgeformten Draht 1 hat dabei eine Dicke von 5,2 µm.

Nach dem Verlassen der Beschichtungskammer 1 wird der mit der Lackierungsschicht 9 versehene Draht 1 mit Wasser abgekühlt, danach getrocknet und dann aufgespult.

### Beispiel 3

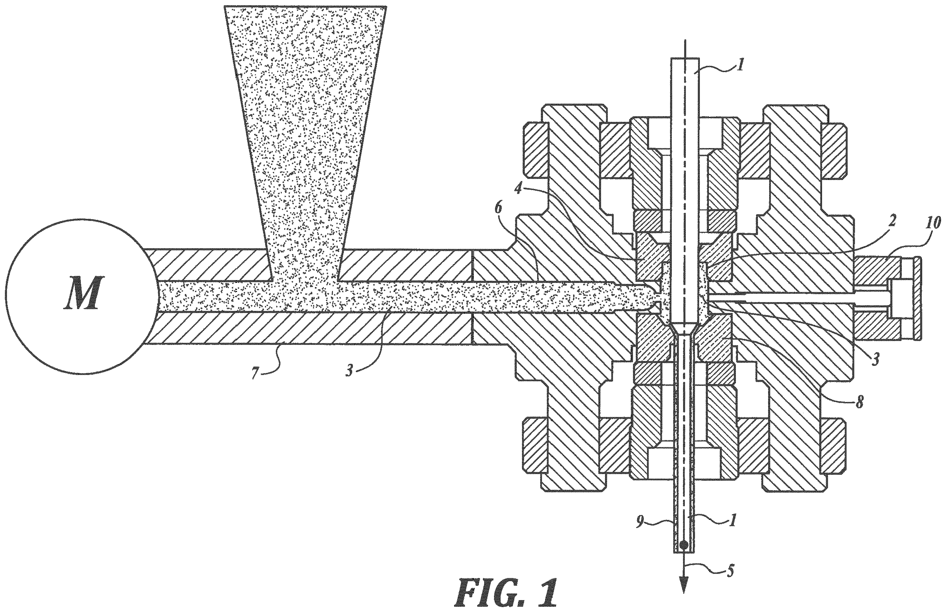

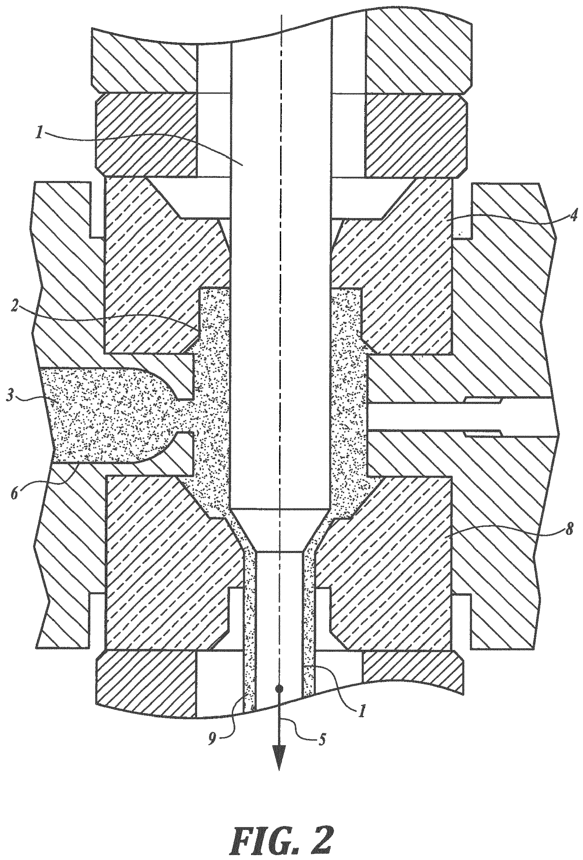

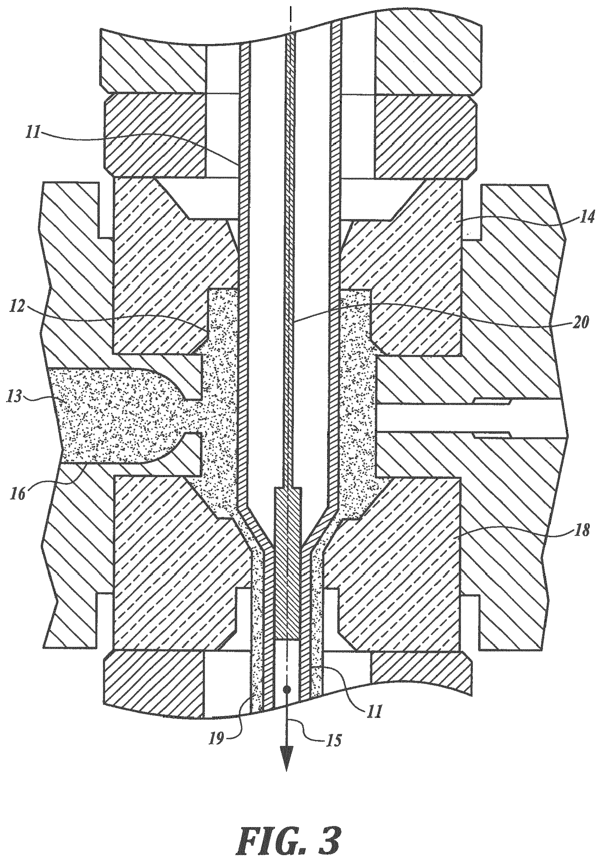

Dieses Beispiel betrifft die Aufbringung einer Beschichtung eines modifizierten Polyethylenwachses auf ein durch ein Rohr 11 gebildetes Beschichtungsgut mit Hilfe der in Figur 3 gezeigten Vorrichtung, welche zu derjenigen der Figuren 1 und 2 ähnlich ist.

Das Rohr 11 besteht in diesem Fall aus Aluminium und kann zum Transport von Fluiden verwendet werden, beispielsweise von Druckluft oder anderen Gasen oder Flüssigkeiten, beispielsweise hydraulischen Flüssigkeiten.

Die Vorrichtung umfasst eine Beschichtungskammer 12, in der verflüssigtes Polyethylenwachs 13 als Lackierungsmittel enthalten ist. Durch die Beschichtungskammer 12 wird ein zu beschichtendes Rohr 11 gezogen. Das Rohr 11 umschließt am Eingang der Beschichtungskammer 12 ein ringförmiges Dichtwerkzeug 14, welches dabei hilft, den Austritt von Lackierungsmittel 13 entgegen der Transportrichtung des Rohres 11 zu vermeiden.

Bei einer Temperatur zwischen 88°C und 90°C wird das verflüssigte Polyethylenwachs 13 mit Hilfe eines Extruders über eine Zuführung 16 in die Beschichtungskammer 12 eingebracht. In der Beschichtungskammer 12 wird ein Druck zwischen 1,0 und 20 MPa erzeugt.

Das Rohr wird bei einer Geschwindigkeit von 4 m/s durch die Vorrichtung gezogen.

Am Ausgang der Beschichtungskammer 12 ist ein Umformwerkzeug angeordnet, welches als gewöhnliches in der Rohrziehtechnologie verwendetes Ziehwerkzeug 18 ausgebildet ist. Innerhalb des Rohres 11 beim Ziehwerkzeug 18 ist ein Ziehdorn 20 angeordnet, um für eine gewünschte Wanddicke des Rohres 11 zu sorgen. Der ursprüngliche Durchmesser des Rohres kann 12 mm betragen bei einer Wanddicke von 1 mm. Sowohl der Durchmesser als auch die Wanddicke können um etwa 5 % reduziert werden.

Beim Umformen durch das Ziehwerkzeug 18 dient das verflüssigte Polyethylenwachs 13 als Schmiermittel und zur gleichen Zeit wird es auf das im Durchmesser reduzierte Rohr 11 während des Umformens als geschlossene und haftende Beschichtung aufgedrückt. Die hergestellte Beschichtung 9 hat eine Dicke von 5-10 µm.

Die Beschichtungskammer 12 steht mit einer Druck- und Temperaturmesseinrichtung 10 in Verbindung, mit der der Druck und die Temperatur in der Beschichtungskammer 12 erfasst werden. Ausgehend von den Messwerten kann mittels einer Druck- und Temperaturregelung der Lackierungsprozess gesteuert und geregelt und somit stabil gehalten werden.

### Beispiel 4

Dieses Beispiel bezieht sich auf die Aufbringung einer Beschichtung eines modifizierten Polyethylenwachses auf ein durch einen Aluminiumdraht 21 gebildetes Beschichtungsgut mit einem Anfangsdurchmesser von 3,6 mm.

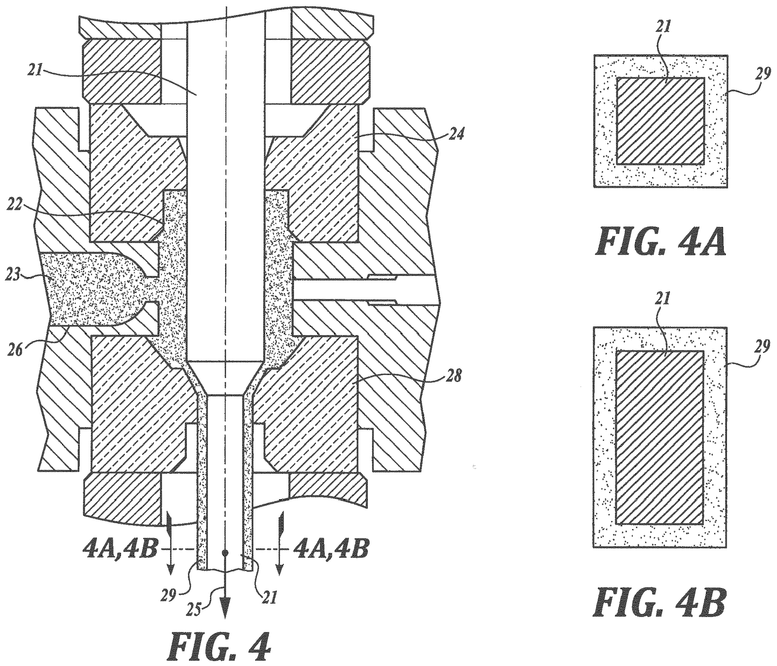

Zur Aufbringung der Beschichtung wird die in Figur 4 gezeigte Vorrichtung verwendet mit dem verflüssigten Polyethylenwachs 23, welches in der Beschichtungskammer 22 enthalten ist und eine Temperatur zwischen 86°C und 88°C aufweist. Der Druck des Lackierungsmittels 23, welcher vom Extruder 27 in der Beschichtungskammer 22 erzeugt wird, ist 1,0 MPa.

Der Draht 21 wird mit einer Geschwindigkeit von 3-4 m/s durch die Vorrichtung gezogen.

Am Ausgang der Beschichtungskammer 22 ist ein Formwerkzeug 28 angeordnet, mit dem der Draht umgeformt wird. Die gesamte Querschnittsfläche des zunächst runden Drahtes kann bei der Umformung in eine quadratische oder rechteckige Form um eine gewünschte Prozentzahl (zum Beispiel zwischen 3-5 %) reduziert werden. Die Querschnittsreduzierung ist allerdings nicht zwangsläufig notwendig, da bei einer Änderung der äußeren Querschnittsform von rund zu quadratisch/rechteckig bereits genügend Druck auf die äußere Oberfläche des gezogenen Materials ausgeübt wird, um das Lackierungsmittel auf das Äußere des Drahtes aufzubringen. Die Lackierungsschicht 29 auf dem umgeformten quadratisch/rechteckig geformten Draht 21 hat eine Dicke von 5-10 µm.

Nach dem Verlassen der Beschichtungskammer 22 wird der mit der Lackierungsschicht 29 versehene Draht 21 mit Wasser gekühlt, getrocknet und danach durch gewöhnliche Umformtechnologie in eine kontinuierliche Klammerform gepresst. Ein Vorteil des vorgenannten Verfahrens ist es, dass vor dem Pressen in eine kontinuierliche Pressform ein Umformen des runden beschichteten Drahtes in eine quadratische/rechteckige Querschnittsform nicht erforderlich ist.

### Beispiel 5

Dieses Beispiel betrifft die Aufbringung einer durch ein modifiziertes Polyethylenwachs gebildeten Lackierungsschicht auf ein Substrat in Form eines Aluminiumdrahtes 31 mit einem Anfangsdurchmesser von 3,6 mm.

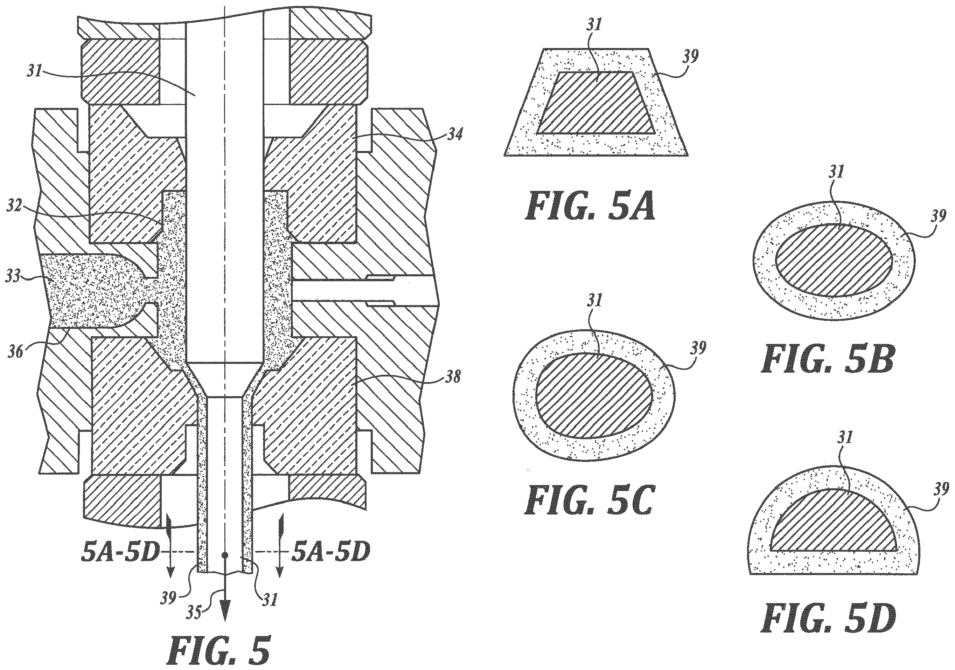

Zur Aufbringung der Lackierungsschicht wird die in Figur 5 gezeigte Vorrichtung verwendet mit dem verflüssigten Polyethylenwachs 3, welches in der Beschichtungskammer 32 enthalten ist und welches eine Temperatur zwischen 86°C und 88°C aufweist. Der Druck des Lackierungsmittels 33, welcher vom Extruder 37 in der Beschichtungskammer 32 erzeugt wird, ist 20-30 MPa.

Der Draht 31 wird mit einer Geschwindigkeit von 3-4 m/s durch die Vorrichtung gezogen.

Am Ausgang der Beschichtungskammer 32 ist ein Formwerkzeug 38 angeordnet, mit dem der Draht 31 umgeformt wird in eine geradlinige, trapezförmige, elliptische, ovale, längliche oder auf sonstige Weise "nicht-runde" Querschnittsform. Die gesamte Querschnittsfläche des zunächst runden Drahtes kann bei der Umformung in die geradlinige, trapezförmige, elliptische, ovale, längliche oder "nicht-runde" Gestalt um eine gewünschte Prozentzahl reduziert werden. Die Querschnittsreduzierung ist allerdings nicht zwangsläufig notwendig, da bei einer Änderung der äußeren Querschnittsform von rund zu geradlinig, trapezförmig, elliptisch, oval, länglich, oder "nicht-rund" genügend Druck auf die äußere Oberfläche des gezogenen Materials ausübt wird, um das Lackierungsmittel auf das äußere des umgeformten Drahtes aufzubringen. Falls die Querschnittsfläche in ihrer Größe reduziert wird, kann die Reduzierung zum Beispiel etwa 3 bis 5 % betragen. Die auf dem umgeformten Draht 31 gebildete Lackierungsschicht 39 hat eine Dicke von 5-10 µm.

Nach dem Verlassen der Beschichtungskammer 32 wird der mit der Lackierungsschicht 39 versehene Draht 31 mit Wasser gekühlt, getrocknet und danach wird der beschichtete und umgeformte Draht geschnitten und zu einer U-förmigen Klammer gepresst. Ein Vorteil des vorgenannten Verfahrens ist es, dass die äußeren Flächen der Klammer abgerundet sind, während die inneren Flächen der geformten Klammer im Wesentlichen flach oder planar sind, wodurch sie einen sicheren Halt ermöglichen, wenn die Klammer zum Verschließen eines rohrförmigen gerafften Behälterendes verwendet werden.

### Aufstellung der verwendeten Bezugszeichen und Begriffe

- 1, 11, 21, 31: Draht
- 2, 12, 22, 23: Beschichtungskammer
- 3, 13, 23, 33: Polyethylenwachs / Lackierungsmittel
- 4, 14, 24, 44: Dichtwerkzeug
- 5, 15, 25, 35: Transportrichtung
- 6, 16, 26, 36: Zuführung
- 7: Extruder
- 8, 18, 28, 38: Werkzeug zur Querschnittsreduzierung / Ziehstein
- 9, 19, 29, 39: Lackierungsschicht
- 10: Druckmesser und Temperaturmesseinrichtung

## Patentansprüche

1. Verfahren zum Auftragen von Lackierungsschichten (9) auf ein Beschichtungsgut (1, 11, 21, 31), bei dem das Beschichtungsgut (1, 11, 21, 31) durch eine Beschichtungskammer (2) gezogen wird, die ein unter einer Druckeinwirkung stehendes Lackierungsmittel (3) enthält, welches durch thermische Einwirkung verflüssigt oder erweicht ist, wobei das Beschichtungsgut (1, 11, 21, 31) durch ein Ziehwerkzeug (8) gezogen wird, wobei das Lackierungsmittel (3) als Schmierstoff zwischen dem Ziehwerkzeug (8) und einer Oberfläche des Beschichtungsguts (8) dient und wobei gleichzeitig die Lackierungsschicht (9) auf die Oberfläche des Beschichtungsgutes (8) aufgetragen wird.

2. Verfahren gemäß Anspruch 1, **dadurch gekennzeichnet, dass** das Beschichtungsgut (1, 11, 21, 31) einen Draht umfasst bzw. drahtförmig ausgebildet ist, oder ein Rohr umfasst bzw. rohrförmig ausgebildet ist.

3. Verfahren gemäß einem der Ansprüche 1 oder 2, **dadurch gekennzeichnet, dass** eine Querschnittsform des Beschichtungsguts (1, 11, 21, 31) beim Ziehen durch das Ziehwerkzeug (8) verändert wird, wobei vorzugsweise ein Querschnitt des Beschichtungsguts (1, 11, 21, 31) reduziert wird.

4. Verfahren nach Anspruch 3, **dadurch gekennzeichnet, dass** mit dem Ziehwerkzeug (8) ein Umformgrad im Bereich von 0,01% bis 30%, vorzugsweise von 0,05% bis 15%, weiter vorzugsweise von 0,1% bis 5 % realisiert wird.

5. Verfahren nach einem der Ansprüche 1 bis 4, **dadurch gekennzeichnet, dass** ein lösungsmittelfreies oder lösungsmittelarmes Lackierungsmittel (3) verwendet wird, wobei als Lackierungsmittel (3) vorzugsweise Polymere, wie Polyethylenwachse oder Polyurethane, verwendet werden, die durch thermische Einwirkung verflüssigt oder erweicht sind.

6. Verfahren nach einem der Ansprüche 1 bis 5, **dadurch gekennzeichnet, dass** eine thermische Einwirkung auf das Lackierungsmittel (3) und/oder auf das Beschichtungsgut (1, 11, 21, 31) durchgeführt wird.

7. Verfahren nach einem der Ansprüche 1 bis 6, **dadurch gekennzeichnet, dass** der Beschichtungskammer (2) ein vorgewärmtes Beschichtungsgut (1, 11, 21, 31) zugeführt wird.

8. Verfahren nach einem der Ansprüche 1 bis 7, **dadurch gekennzeichnet, dass** das mit der Lackierungsschicht (9) versehene Beschichtungsgut (1, 11, 21, 31) nach dem Verlassen der Beschichtungskammer (2) gekühlt wird.

9. Verfahren nach einem der Ansprüche 1 bis 8, **dadurch gekennzeichnet, dass** der in der Beschichtungskammer (2) vorhandene Druck und / oder die vorhandene Temperatur gemessen werden, wobei die Messwerte zu einer Steuerung und Regelung des Lackierungsprozesses und seiner Stabilität genutzt werden.

10. Vorrichtung zum Auftragen von Lackierungsschichten (9) auf ein Beschichtungsgut (1, 11, 21, 31) enthaltend, eine Beschichtungskammer (2), durch die das Beschichtungsgut (1, 11, 21, 31) gezogen werden kann, wobei die Beschichtungskammer (2) ein unter einer Druckeinwirkung stehendes Lackierungsmittel (3) enthält, welches durch eine thermische Einwirkung verflüssigt oder erweicht ist, wobei die Beschichtungskammer (2) ein Ziehwerkzeug (8) aufweist, durch das das Beschichtungsgut (1, 11, 21, 31) gezogen werden kann.

11. Vorrichtung gemäß Anspruch 10, **dadurch gekennzeichnet, dass** das Beschichtungsgut einen Draht umfasst bzw. drahtförmig ausgebildet ist oder ein Rohr umfasst bzw. rohrförmig ausgebildet ist.

12. Vorrichtung nach einem der Ansprüche 10 oder 11, **dadurch gekennzeichnet, dass** das Ziehwerkzeug (8) dazu ausgebildet ist, einen Querschnitt des Beschichtungsguts (1, 11, 21, 31) zu reduzieren, wenn das Beschichtungsgut (1, 11, 21, 31) durch das Ziehwerkzeug (8) gezogen wird.

13. Vorrichtung nach Anspruch 12, **dadurch gekennzeichnet, dass** das Ziehwerkzeug (8) ein in der Drahtziehtechnologie gängiger Ziehstein (8) ist, wobei das Ziehwerkzeug (8) vorzugsweise für eine Querschnittsreduzierung des Drahtes (1) mit einem Umformgrad im Bereich von 0,01% bis 30% ausgelegt ist, weiter vorzugsweise von 0,05% bis 15%, noch weiter vorzugsweise von 0,1% bis 5 %.

14. Vorrichtung nach einem der Ansprüche 10 bis 13, **dadurch gekennzeichnet, dass** das Ziehwerkzeug (8) dazu ausgebildet ist, eine Querschnittsform des Beschichtungsguts (1, 11, 21, 31) zu verändern, wenn das Beschichtungsgut (1, 11, 21, 31) durch das Ziehwerkzeug (8) gezogen wird.

15. Vorrichtung nach einem der Ansprüche 10 bis 14, **dadurch gekennzeichnet, dass** die Beschichtungskammer (2) beheizbar ist, wobei an der Beschichtungskammer (2) vorzugsweise ein Druckmesser und / oder eine Temperaturmesseinrichtung (10) angeschlossen sind, deren Messwerte zu einer Steuerung und Regelung des Lackierungsprozesses und seiner Stabilität genutzt werden.
